Europäisches Patentamt

European Patent Office

Office européen des brevets

(19)

(11) Publication number: **0 445 461 A1**

# EUROPEAN PATENT APPLICATION

(12)

(21) Application number: **90309033.0**

(22) Date of filing: **17.08.90**

(51) Int. Cl.5: **C09J 7/04**, **D06N 7/06**, **B32B 7/14**

(30) Priority: **08.03.90 GB 9005216**

(43) Date of publication of application:
**11.09.91 Bulletin 91/37**

(84) Designated Contracting States:
**BE DE DK ES FR GB IT NL SE**

(71) Applicant: **ALLIED COLLOIDS LIMITED**
**P.O. Box 38 Low Moor**
**Bradford West Yorkshire, BD12 0JZ(GB)**

(72) Inventor: **Clarke, John Bernard**
**10 Smithy Lane**
**Wilsden Bradford, West Yorkshire BD15**
**0E(GB)**
Inventor: **Seddon, Roy**
**2, Pennygate**
**Eldwick, West Yorkshire(GB)**
Inventor: **Couldwell, Pauline Lesley**
**34 Mill Street**
**Birstall, Batley, West Yorkshire(GB)**

(74) Representative: **Lawrence, Peter Robin**
**Broughton et al**
**GILL JENNINGS & EVERY 53-64 Chancery**
**Lane**
**London WC2A 1HN(GB)**

(54) **Adhesive materials and their production.**

(57) Polyvinyl chloride coated and other prepasted wall coverings have a prepaste coating that is a substantially uniform discontinuous printed or sprayed coating comprising coated areas separated by small uncoated areas.

EP 0 445 461 A1

This invention relates to products comprising a sheet substrate having a dry, water activatable, adhesive coating, and in particular it relates to prepasted wall coverings.

One type of sheet substrate having a dry water activatable adhesive coating is a gummed label. Gummed labels are always supplied as relatively small elements, usually having a maximum dimension of not more than a few centimetres. Their surface is often blank (ready to receive written information) or can be preprinted with written information such as address labels or with an overall pattern such as a postage stamp. The water activatable gum is designed to be activated by being moistened with water. Excess of water should usually be avoided and, in particular, immersion is undesirable.

The nature and the amount of the gum is selected so that the adhesive surface, when moist, will gripe agaist the paper or other surface to which it is to adhere and so that this gripping occurs substantially immediately upon contact. Slippage after contact is generally unecessary and positively undesirable.

The substrate of the label is usually a relatively thin and dense paper, that is often highly filled, and the combination of the adhesive coating with the nature of the paper and the size of the label means that there is a high risk of the label curling on storage or exposure to ambient humidity.

This problem has been known for very many years and various methods of avoiding it are known and are discussed in, for instance, EP-A-217672. These methods include mechanically breaking the film of gum by contact with blades, providing the gum in the form of a honey comb matrix as a result of the inclusion of particulate material, and printing the adhesive as a discontinuous pattern, e.g. by rotary screen printing. The exemplified adhesives are polyvinyl alcohol and dextrin, but acrylic polymers are also mentioned.

In addition to water activatable gum labels, it is of course very well known to provide labels and other sheet materials with pressure sensitive adhesive coatings, and it is likewise known to print pressure sensitive adhesives as a discontinuous pattern, for instance by rotary screen printing in WO 8504672. A system of printing adhesive onto labels by ink jet printing and substantially immediately applying the labels to articles that are to be labeled is described in EP-A-172709.

Prepasted wall coverings are supplied as long rolls, always well over a metre long and often 5 to 50 metres long. A typical domestic length is about 9 metres. The rolls are always at least about 5cm wide. They can be this narrow, or for instance up to about 20cm wide, if they are to serve as a border but in practice the great majority are much wider, for instance at least 40cm wide for domestic use or upto 2 metres or more for commercial use. The properties required of the prepaste in wall coverings are entirely different from those required of the gum on labels. Also, the substate is usually entirely different since it must be sufficiently strong to allow for total immersion in water and for carrying the weight of a long strip of the wet wall covering while the wet material is being hung on the wall or ceiling. The nature and the amount of adhesive coating must be such as to give good slip properties so as to allow the wall covering to be made to slide after application to the wall surface.

Prepasted wall coverings are made at very high speed with speeds of 50 to 300 metres per minute being typical, and involve apparatus for the feed and transport of the sheet substrate, apparatus for the application of the adhesive and one or more ovens for drying the adhesive coating. It is difficult to maintain such apparatus under conditions for efficient operation even when the adhesive is applied in the simplest possible manner. For instance adhesive may clog parts of the apparatus which then has to be stopped and cleaned. Other problems that arise are that performance can vary according to changes in, for instance, ambient conditions or the nature of the substrate, and the variability in performance may be difficult to observe because it may manifest itself on storage rather than upon initial manufacture.

A traditional method of making prepasted wallcoverings has involved dusting starch on to the substrate, generally after wetting the entire substrate. However the dusting process is undesirable and so it is now often preferred to apply the adhesive from a liquid system. One method that has been used involves applying an overall coating of a reverse phase dispersion of adhesive polymer particles in oil or other water immiscible liquid, followed by evaporation of this liquid e.g. as described in US patents 4361452 and 4476190. Application of a solution of the polymer tends to be unsatisfactory because of the difficulty of applying sufficient adhesive in a prepaste wall covering by this means. Another method that has been used comprises applying an oil-in-water emulsion of an alkali sensitive polymer, drying the coating of the emulsion, applying alkali, drying the composite coating and then relying upon the alkali to permeate into the emulsion coating and converted to an adhesvie form, when the paper is wetted prior to hanging. However, this method has not been widely adopted.

In addition to variability in performance of perpaste wall coverings, a problem sometimes arises when the susbtrate carries an impermeable film on the surface opposite to the prepaste. This film may be present to impart decoration and/or water resistance to the wall covering. The problem that is observed is that blistering of this film is sometimes found to occur during the drying stages, especially when these are at a temperature designed to give curing of the film. This is obviously undesirable and there is therefore a need to avoid it. However, it is preferred that a coating system should be applicable to a wide range of substrates, rather than being designed specifically for a particular kind of substrate, and so it would be desirable to devise a prepaste coating system that was conviently applicable to all substrates but which, in particular, avoided this problem of blistering when the substrate carries an impermeable film.

A prepasted wall covering according to the invention comprises a sheet substrate having a decoration on one surface and a dry water activatable adhesive coating on the other surface, and the adhesive coating is a susbtantially uniform discontinuous printed or sprayed coating comprising coated areas separated by uncoated areas.

The substrate can be any substrate suitable for prepasted wall coverings. Thus it can be for instance, a metallised foil, hessian, a polyvinyl chloride composite, a non woven substrate or a paper substrate. Invention is of particular value when the substrate is impermeable, especially when the substrate comprises a fibrous substrate having, on the surface opposite the prepaste coating, an impermeable layer. This layer does not have to be an overall coating since even if there are some discontinuities in it blistering is still a problem within the coated areas, prior to the invention. The impermeable layer may be a non foamed layer of polymeric (generally polyvinyl chloride) material or it may be a foamed layer, generally formed by applying a foamable layer and then foaming during or after the prepaste coating. The foamed layer is generally of polyvinyl chloride. The substrate may be provided with decoration either before or after the formation of the dry prepaste coating.

We believe that the blistering that has been observed arises particularly when the substrate (including any coating on it) includes volatile solvent and/or plssticiser and such materials are generally present in curable polyvinyl chloride compositions.

It is necessary that the discontinuous prepaste coating should cover a sufficiently large and uniformly distributed proportion of the surface of the substrate that the adhesive will give the appropriate slippage and adhesive properties during use. It is therefore generally necessary that at least 25%, usually at least 40% and preferably at least 50% of the surface of the substrate should be coated, with the balance being uncoated. The proportion that is coated must not be too high as otherwise the discontinuous coating will not give the desired effect and preferably therefore the coated areas are not more than 90%, and generally not more than 80% of the total surface area.

The uncoated areas must not be too large and generally it is preferred that no part of the surface shoul be more than about 3mm from a coated area. Preferably no part of the surface should be more than about 1, or the most 2mm, from a coated area and best results are achieved when no part of the surface is more than about 0.5mm from a coated area. By having these very small separations we find that it is then easily possible to select the adhesive so that, when wetted, the adjacent coated areas swell sufficient that they substantially merge into one another.

The discontinuous coating can be applied by spraying a liquid composition of the polymeric material on to the substrate, so as to form dots or fibres of the polymeric material on the substrate, provided the spraying density is not sufficient for the dots or fibres to merge into a wholly continuous film, although some merging into a discontinuous film can be tolerated.

Preferably however the discontinuous coating is applied by printing, for instance into a pattern of lines or dots. The spacing between adjacent coated areas is preferably not more than 6mm, so that everywhere is within 3mm of a coated area, and often the spacing is not more than 2 or 3mm, preferably 1mm or less. The width of printed dots is generally not more than 4mm and is generally below 3mm, typically not more than 2mm.

The adhesive is preferably a water soluble or water swellable polymer of ethylenically unsaturated monomers that is adhesive when wet. It is generally applied from a liquid composition and can be printed (or sprayed) by any technique that is capable of giving the desired coating weight having regard to the particularly liquid composition that is available. Since the coating weights for prepasted wall coverings tend to be rather high (typically 2 to 15, often 4 to 10, grammes of the dry adhesive polymeric per square metre of substrate) careful selection of the rheology of the liquid composition is therefore necessary when using conventional printing techniques. For instance solutions of water-activatable polymers tend to be very viscous and adhesive unless they are so dilute as to render the drying of the coating uneconomic, and emulsions and dispersions of water-activatable polymer tend to be of very low viscosity unless they are thickened, and this can be undesirable.

We have surprisingly found that ink jet printing techniques are especially suited to the printing of liquid compositions of water-activatable adhesive polymeric material, since such compositions can conveniently have a rheology that is suitable for ink jet printing. Thus preferably the discontinuous coating is a coating of dots that have been applied by ink jet printing.

Various types of ink jet printing are known and can be used. One type of ink jet printing is known as the Continuous Ink Jet process. In this pressurised fluid is broken up into droplets that are emitted from capillaries as a continuous stream. After emission, these droplets can be selectively charged and deflected to differing degrees so that they can be directed to the desired location by charged plates. An example is in EP 0287373.

In the process known as the Drop-on-Demand process, a multi nozzle head comprises a series of jet capillaries which can be arranged into any suitable printing module and to which fluid is supplied. The capillaries are opened and closed to emit drops in the desired pattern on to the sheet substrate. An example is in EP 0260929.

Typically the ink jet printing technique is used to form dots that can have dimensions of 0.02 to 4mm, often 0.1mm to 3mm and preferably approximately 2mm, with spacing between the dots of from 0.5mm to 6mm. A typical jet printer will have approximately 5 jets per centimetre. Thus, typically there will be from 1 to 10 capillary jets per centimetre and preferably from around 3 to 7, typically with diameters of 0.2 to 0.7mm.

The liquid composition that is applied can be a solution of polymer, for instance an aqueous solution, and the polymer that is printed can be cross linked after printing, for instance by the inclusion of an external cross linking agent or by the polymer having reactive groups in it, for instance as described in EP 0268498 and EP 0269393. If the solution has inadequate rheology for the ink jet printing or other application technique, conventional additives to improve the rheology can be incorporated.

Preferably however the liquid composition is an emulsion of polymeric material. The emulsion can be a reverse phase dispersion of polymeric material in a water immiscible liquid. Preferably the emulsion is an emulsion in water of polymeric material that is not swellable in water but which is soluble or swellable in alkali. The use of such an emulsion has the advantage that the emulsion can be of low viscosity even though it can have a relatively high solids content, so as to obtain a relatively high coating rate. It also has the advantage that it does not involve the volatilisation of large quantities of organic solvent. Typically the emulsion has a viscosity of 10 to 100, preferably 20 to 30, cps and a polymer content of 10 to 60%, often about 30%, by weight. The rheology of the continuous aqueous phase can be modified, if desired, so as to improve its suitability of ink jet printing or other applciation techniques. Generally the melt flow temperature (MFT) of the emulsion should be above 15° C, preferably above 25° C and most preferably above 30° C.

After the emulsion has emerged from the orifices of the sprayer or printer, it is necessary to contact the polymer with alkali so as to convert the polymer into soluble or swellable form. Alkali may have been previously applied to the substrate but this can have the disadvantage that it may have an adverse effect on the substrate, for instance it may cause yellowing. Preferably therefore the alkali is applied simultaneously or after the polymer.

In one system, the polymer emulsion is printed on to the substrate and is then dried and the alkali is then applied over the dried polymeric coating, with subsequent drying. The alkali can be applied as a continuous layer or a discontinuous layer, in which event it is preferably applied in registry with the polymer. The alkali coating can then be dried and when the resultant dried coating is rewetted with water the alkali will migrate down into the polymeric coating so as to convert the polymer into soluble or swellable adhesive form.

Preferably however a wet coating of the emulsion is formed, for instance by ink jet printing, and the polymer in the coating is subsequently or simultaneously converted to the soluble or swellable form by contact with aqueous alkali in the wet coating, and the resultant coating is then dried. This method is described in our application "Adhesive materials and their Production" (reference 60/3049) filed today.

This method has a number of advantages. It involves only a single drying stage. It is easier to obtain accurate registration of the alkali dots with the polymer dots, if the alkali is to be applied by ink jet printing. However it is also possible to apply the alkali as an overall coating, for instance by spraying.

The process may be conducted continuously with a continuous substrate being moved past a jet printer and then past means for applying the alkali and then through a drier.

When the alkali is being applied by ink jet printing, it can be applied through the same printing head as the polymer emulsion or, preferably, it is applied through a separate printing head after the polymer emulsion has been applied.

The alkali is preferably applied by a non-contact method so as to avoid fouling of application apparatus by the swollen or dissolved polymer.

A particular advantage of applying a alkali sensitive polymer is that they polymer will swell during the conversion to the alkali soluble or swellable form with the result that it can be printed or sprayed with uncoated areas larger than is desirable, and reliance can be placed upon the swelling of the polymer to increase the size of the coated areas and reduce the size of the uncoated areas.

When, as is preferred, the polymer is substantially entirely converted to the alkaline form before drying is complete, the wet coating may also appear uniform but the shrinkage caused during drying will result in the coating being much more permeable to organic solvents than would be the situation if the emulsion had been applied as a uniform coating. The presence of this increased permeability is thus a clear manifestation that the coated area does include very small uncoated areas distributed throughout, even though it may he difficult to see them with the naked eye.

The polymer emulsion is preferably made by emulsion polymerisation of a blend of monomers that is insoluble in water but soluble in aqueous alkali. The monomers are preferably ethylenically unsaturated monomers and will include an anionic ethylenically unsaturated monomer that is in the free acid form when in the emulsion but which, when in the alkali salt form, results in the polymer being soluble or swellable in water. The anionic monomer is preferably methacrylic acid, but other ethylenically unsaturated carboxylic monomers such as acrylic acid can be used.

The anionic monomer is usually blended with a water insoluble monomer such as ethyl acrylate or other alkyl (meth) acrylates, acrylonitrile, styrene, vinyl acetate or other monomer of the type conventionally used in polymer-in-water emulsion polymerisation.

It is particularly preferred that the polymer should be an associative polymer. Oil-in-water emulsions of associative polymers are well known and are described in EP 0216479 and in the prior art referred to in that, and the use of such polymers as wallcovering adhesives is described in EP 0214760. Thus it is particularly preferred to use the oil-in-water emulsion polymers described in those specifications, and reference should be made to them for a full description of suitable associative polymers.

Preferred polymers are those in which the associative monomer is an ethylenically unsaturated monomer (for instance an acrylic ester, acrylamide or, preferably, allyl ether) in which the substituent has a C8 to 30, generally C10 to 24 hydrophobe connected to the unsaturated group, preferably by a polyethoxy chain of at least 2, and usually at least 5 and often at least 10 ethoxy groups. The hydrophobe is generally alkyl or alkaryl, eg stearyl or nonyl phenyl.

The polymer can be linear, in which event the neutralised polymer will generally be soluble in water, or it can be cross linked, in which event the neutralised polymer will be swellable in water.

The alkali can be any material that will neutralise the emulsion polymer and convert it to soluble or swellable form. It can be supplied as a gas (for instance ammonia) but is preferably supplied as an aqueous solution of for instance ammonia or an alkali metal compound, generally of sodium, most usually sodium carbonate or other inorganic compound that is alkaline.

Instead of using a monomeric alkali, a water soluble cationic polymer can be used as the alkali and this can be advantageous as it minimises the risk of yellowing or otherwise damaging the substrate by contact with inorganic alkali. Suitable cationic polymers are made from water soluble monomers such as dialkylaminoalkyl (meth) acrylates, especially dimethylaminoethyl (meth) acrylate, and their quaternary or acid salts, dialkylaminoalkyl (meth) acrylamides and their quaternary or acid salts for instance methacrylamidopropyl trimethylammonium chloride and Mannich products such as quaternised dimethylamino- methylacrylamides, and monomers such as diallyl dimethylammonium chloride. They may be hompolymers or copolymers, generally with acrylamide. Polyethyleneimines and polyamine epichlorohydrin are also suitable.

The polymerisation conditions for such cationic polymers are preferably such that the polymer has a relatively low molecular weight so that it is water soluble and does not form a considerably viscous solution. Solution polymerisation in water is the most preferred form. The resultant molecular weight may be from 20,000 to 5,000,000 and preferably from 100,000 to 1,000,000.

After applying the alkali on to the wet coating, and optionally after allowing the wet coating to stand for a short while to permit further mixing of the components and solubilisation or swelling of the polymer, the coating is then dried, for instance by passing the substrate through an oven.

When it is desired to adhere the substrate to, for instance, a wall or other surface, the dried coating can be wetted with water, and this will result in solubilisation or swelling of the coating, so as to form an adhesive coating on the substrate. This can then be hung on the wall, or otherwise adhered, in conventional manner.

As an example, a 30% polymer emulsion in water is formed by oil-in-water polymerisation as described in EP 0216479 from a stearyl ethoxylate of allyl ether, methacrylic acid and ethyl acrylate.

This emulsion is supplied to a drop-on-demand jet printer wherein the capillaries are extended across the wallcovering substrate that is passed continuously beneath the printer. The capillaries in the printer are positioned at regular intervals, with 12 capillaries per 2.5 centimetres (1 inch) and have a diameter of about 0.6mm. The emulsion is printed in a uniform manner across the entire width of the wallcovering and this is followed by the application in the same way using a jet printer, of a 10% aqueous solution of dimethylaminoethyl acrylate-acrylamide copolymer directly on top of the printed dots of the polymer emulsion. Approximately equal volumes of the emulsion and aqueous solution are applied to give a dry coating weight of 6 grams per square metre. The substrate travels at a rate of up to 200 metres per minute beneath the jet printer heads, and is then dried in a hot air oven.

## Claims

1. A prepasted wall covering comprising a sheet substrate having a decoration on one surface and a dry water activatable adhesive coating on the other surface, characterised in that the adhesive coating is a substantially uniform discontinuous printed or sprayed coating comprising coated areas separated by uncoated areas.

2. A wall covering according to claim 1 in which the sheet substrate has a substantially water impermeable coating on the surface carrying the declaration.

3. A water ring according to claim 1 or claim 2 comprising a fibrous substrate and a polyvinyl chloride foamed or unfoamed continuous or discontinuous layer including organic solvent and/or plasticiser.

4. A wall covering according to any preceding claim in which the maximum separation between coated areas is not more than 6mm, preferably not more than 2mm.

5. A wall covering according to any preceding claim in which the coated areas are printed dots having a size from 0.02 to 4mm and a spacing of 0.5 to 6mm.

6. A wall covering according to any preceding claim in which the coated areas are printed by ink jet printing.

7. A coating according to any preceding claim in which the adhesive coating is of a water soluble or water swellable polymer of ethylenically unsaturated monomers and that is adhesive when wet.

8. A wall covering according to claim 7 in which the monomers include a monomer having a C8-30 hydrophobic group connected to a unsaturated carbon atom of the monomer.

9. A wall covering according to claim 7 or claim 8 in which the polymer is an alkaline water soluble or water swellable form of a polymer that, in free acid form is an insoluble and non swellable polymer and that was made by oil-in-water polymerisation.

10. A wall covering according to any preceding claim made by applying coated areas of polymeric material separated by uncoated areas and subsequently swelling the polymeric materials in the coated areas and thereby reducing the size of the uncoated areas.

## DOCUMENTS CONSIDERED TO BE RELEVANT

EP 90309033.0

| Category | Citation of document with indication, where appropriate, of relevant passages | Relevant to claim | CLASSIFICATION OF THE APPLICATION (Int. Cl.5) |
|---|---|---|---|
| Y | <u>GB - A - 2 054 628</u><br>(SCOTT BADER COMPANY)<br>* Claims 1,5-7,9 *<br>-- | 1,3,7,<br>10 | C 09 J 7/04<br>D 06 N 7/06<br>B 32 B 7/14 |
| Y | <u>EP - A1 - 0 159 132</u><br>(ALLIED COLLOIDS LIMITED)<br>* Claims 1,5,6,9 *<br>-- | 1,7,10 | |
| D,A | <u>EP - A2/A3 - 0 217 672</u><br>(THE WIGGINS TEAPE GROUP LIMITED)<br>* Abstract *<br>-- | 1,4,5 | |
| D,A | <u>EP - B1 - 0 172 709</u><br>(WILLETT INTERNATIONAL LIMITED)<br>* Column 1, lines 1-40 *<br>---- | 1,6 | |

TECHNICAL FIELDS
SEARCHED (Int. Cl.5)

C 09 J
D 06 N
B 32 B
B 41 J

The present search report has been drawn up for all claims

| Place of search | Date of completion of the search | Examiner |
|---|---|---|
| VIENNA | 08-05-1991 | BÖHM |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)